(19) **Europäisches Patentamt**
**European Patent Office**
**Office européen des brevets**

(11) **EP 4 477 388 A1**

(12) **EUROPEAN PATENT APPLICATION**
published in accordance with Art. 153(4) EPC

(43) Date of publication:
**18.12.2024 Bulletin 2024/51**

(21) Application number: **23844060.6**

(22) Date of filing: **23.05.2023**

(51) International Patent Classification (IPC):
**B29C 64/165** (2017.01)     **B29C 64/40** (2017.01)
**B29C 70/44** (2006.01)     **B29C 64/118** (2017.01)
**B29C 64/209** (2017.01)     **B29C 64/218** (2017.01)
**B29C 64/393** (2017.01)     **B33Y 10/00** (2015.01)
**B33Y 30/00** (2015.01)     **B33Y 50/02** (2015.01)

(52) Cooperative Patent Classification (CPC):
**B29C 64/118; B29C 64/209; B29C 64/218;**
**B29C 64/393; B29C 64/40; B33Y 10/00;**
**B33Y 30/00; B33Y 50/02;** Y02P 10/25

(86) International application number:
**PCT/CN2023/095683**

(87) International publication number:
**WO 2024/221516 (31.10.2024 Gazette 2024/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **25.04.2023 CN 202310457581**

(71) Applicant: **Huazhong University of Science and**
**Technology**
**Wuhan**
**Hubei 430074 (CN)**

(72) Inventors:
• **PENG, Fangyu**
**Wuhan**
**Hubei 430074 (CN)**
• **DENG, Ben**
**Wuhan**
**Hubei 430074 (CN)**

• **YI, Jiale**
**Wuhan**
**Hubei 430074 (CN)**
• **LI, Zhijie**
**Wuhan**
**Hubei 430074 (CN)**
• **SHEN, Jinguo**
**Wuhan**
**Hubei 430074 (CN)**
• **YAN, Aodi**
**Wuhan**
**Hubei 430074 (CN)**
• **YAN, Rong**
**Wuhan**
**Hubei 430074 (CN)**

(74) Representative: **Kurig, Thomas**
**Becker Kurig & Partner**
**Patentanwälte mbB**
**Bavariastraße 7**
**80336 München (DE)**

(54) **ADDITIVE MANUFACTURING METHOD AND DEVICE FOR COMPLEX STRUCTURE OF FIBER REINFORCED COMPOSITE MATERIAL**

(57) The disclosure belongs to the technical field related to the additive manufacturing of composite materials and discloses an additive manufacturing method and manufacturing device for a complex structure of fiber-reinforced composite material. The complex structure is a skin-honeycomb sandwich layer structure, and the manufacturing method includes: printing a supporting mold through a fused deposition process and by using a water-soluble resin material; assisting a fiber automatic placement process through laser heating and constant force rolling and performing placement on the supporting mold to form a lower skin structure by using a fiber-reinforced pre-preg material; printing and forming a honeycomb structure on a surface of the lower skin structure through the fused deposition process and by using the fiber-reinforced composite material; performing placement on the honeycomb structure again to form an upper skin structure; and removing the supporting mold to

**(Cont. next page)**

obtain the skin-honeycomb sandwich layer structure. The disclosure is capable of achieving moldless and rapid manufacturing of the complex structure of the fiber-reinforced composite material such as an aerospace skin-honeycomb sandwich layer. Compared to a conventional manufacturing method, part manufacturing time and costs are significantly decreased while ensuring the mechanics properties.

Printing a supporting mold through a fused deposition additive manufacturing process and by using a water-soluble resin material — S1

Assisting a fiber automatic placement process through laser heating and constant force rolling and performing fiber tow placement on the supporting mold to form a lower skin structure by using a fiber-reinforced pre-preg material — S2

Printing and forming a honeycomb structure on the surface of the lower skin structure through the fused deposition additive manufacturing process and by using a fiber-reinforced composite material — S3

Performing the fiber tow placement on the honeycomb structure by adopting the process in S2 to form an upper skin structure — S4

Removing the supporting mold to obtain the integrally formed skin-honeycomb sandwich layer structure — S5

FIG. 1

## Description

## BACKGROUND

Technical Field

The disclosure belongs to the technical field related to additive manufacturing of composite materials, and in particular, relates to an additive manufacturing method and manufacturing device for a complex structure of a fiber-reinforced composite material.

Description of Related Art

As early as the 1980s, 3% to 5% para-aramid honeycomb sandwich layer structure fiber-reinforced composite materials were used on Boeing 767 and Airbus A320 commercial aircraft. The floor structure on the European giant aircraft "Airbus A380" is largely made of honeycomb sandwich layer structure composite materials. Excellent material properties enable the A380's operating life to reach 20,000 hours. Compared to other structures of the same thickness, the skin-honeycomb sandwich layer structure composite materials have an excellent weight reduction effect while maintaining high stiffness and strength, and the weight reduction can reach more than 50%. In addition, the skin-honeycomb sandwich layer structure composite materials also have excellent fatigue resistance, heat insulation, and impact resistance. Therefore, the skin-honeycomb sandwich structure composite materials have received increasing attention in aerospace and other fields and have been widely used in parts such as wings, fuselages, tails, and radomes.
At present, most of the preparation of the skin-honeycomb sandwich layer structure parts is inseparable from manual preparation. The individually formed honeycomb sandwich layer is manually placed on the lower skin structure, and then the upper skin structure and the honeycomb sandwich layer structure are aligned manually or through a machine. The upper and lower skin structures and the honeycomb sandwich layer are then pasted together to produce the skin-honeycomb sandwich layer structure parts. In the currently available production processes of complex composite structures such as the skin-honeycomb sandwich structures, there are problems such as low degree of automation, low accuracy of molded parts, high labor intensity, and poor quality stability of parts.

## SUMMARY

In response to the above defects or the need for improvement, the disclosure provides an additive manufacturing method and manufacturing device for a complex structure of a fiber-reinforced composite material capable of solving problems such as low degree of automation, low accuracy of molded parts, high labor intensity, and poor quality stability of parts found in the currently-available production processes of complex composite structures such as the skin-honeycomb sandwich structures, so that the degree of automation in preparing skin-honeycomb sandwich layer structure parts is improved, the parts are lightweight, the mechanical properties are ensured, and the part manufacturing time and costs are significantly decreased.
To achieve the above, in an aspect of the disclosure, the disclosure provides an additive manufacturing method for a complex structure of a fiber-reinforced composite material. The complex structure is a skin-honeycomb sandwich layer structure, and the manufacturing method includes the following steps.
In S1, a supporting mold is printed through a fused deposition additive manufacturing process and by using a water-soluble resin material.
In S2, a fiber automatic placement process is assisted through laser heating and constant force rolling, and fiber tow placement is performed on the supporting mold to form a lower skin structure by using a fiber-reinforced pre-preg material.
In S3, a honeycomb structure is printed and formed on the surface of the lower skin structure through the fused deposition additive manufacturing process and by using the fiber-reinforced composite material.
In S4, the fiber tow placement is performed on the honeycomb structure by adopting the process in S2 to form an upper skin structure.
In S5, the supporting mold is removed to obtain the integrally-formed skin-honeycomb sandwich layer structure.
According to another aspect of the disclosure, the disclosure further provides an additive manufacturing device for a complex structure of a fiber-reinforced composite material including a host computer, a robot, a turntable, and a printing unit group. The robot, the turntable, and the printing unit group are connected to the host computer. The printing unit group is connected to the robot. The printing unit group includes a fiber placement unit, a water-soluble resin material printing unit, and a fiber-reinforced composite material printing unit.
In general, when the above technical solution provided by the disclosure is compared to the related art, in the additive manufacturing method and manufacturing device for the complex structure of the fiber-reinforced composite material:

1. It is proposed to first use the water-soluble resin material to print and form the supporting mold and remove the supporting mold at last. In this way, the problems of difficulty in custom mold iteration and mold customization in the current fiber placement technology are solved. In the manufacturing method, the integrated skin-honeycomb sandwich layer structure is manufactured through additive manufacturing, so that the automation level of preparing skin-honeycomb sandwich layer structure parts is improved, labor costs are saved, and production costs are reduced.

2. When the supporting mold is printed, the curved surface slicing method and variable flow rate printing method are proposed, which are beneficial to improving printing accuracy and printing efficiency.

3. The proposed honeycomb structure printing path-filling algorithm can achieve efficient and accurate printing and molding of the honeycomb structure.

4. Through the real-time monitoring of the placement pressure of the anti-collapse roller and the arrangement of the pressure roller cross-section, the collapse of the hollow part of the honeycomb structure that occurs during the skin placement process may be effectively reduced, and the mechanics properties and surface quality of the skin-honeycomb structure parts may be effectively improved.

## BRIEF DESCRIPTION OF THE DRAWINGS

FIG. 1 is a schematic chart of an additive manufacturing method for a complex structure of a fiber-reinforced composite material provided by the disclosure.

FIG. 2 is a schematic view of a skin-honeycomb sandwich layer structure by the disclosure.

FIG. 3 is a schematic view of a slicing method of a supporting mold provided by the disclosure.

FIG. 4 is a schematic view of a curved surface slicing method of the supporting mold provided by the disclosure.

FIG. 5 is a schematic view of a planar structure of a honeycomb structure provided by the disclosure.

FIG. 6 is a schematic view of the periodic division of the planar structure of the honeycomb structure provided by the disclosure.

FIG. 7 is a schematic view of the periodic division of odd-numbered curve segments in the planar structure of the honeycomb structure provided by the disclosure.

FIG. 8 is a schematic view of the coordinate acquisition of periodic line segments of the odd-numbered curve segments provided by the disclosure.

FIG. 9 is a schematic view of the coordinate acquisition of periodic line segments of even-numbered curve segments provided by the disclosure.

FIG. 10 is a schematic view of compaction operation by a pressure roller provided by the disclosure.

FIG. 11 is a schematic structural view of the pressure roller provided by the disclosure.

FIG. 12 is a transverse schematic view of the pressure roller during the compaction operation provided by the disclosure.

FIG. 13 is a lateral schematic view of the pressure roller during the compaction operation provided by the disclosure.

FIG. 14 is a schematic view of the honeycomb structure provided by the disclosure.

FIG. 15 is a schematic chart of the actual implementation of the additive manufacturing method for the complex structure of the fiber-reinforced composite material provided by the disclosure.

FIG. 16 is a schematic view of an additive manufacturing device for a complex structure of a fiber-reinforced composite material provided by the disclosure.

FIG. 17 is a first schematic view of a printing unit group in the additive manufacturing device provided by the disclosure.

FIG. 18 is a second schematic view of the printing unit group in the additive manufacturing device provided by the disclosure.

FIG. 19 is a first schematic view of a fiber placement unit provided by the disclosure.

FIG. 20 is a second schematic view of the fiber placement unit provided by the disclosure.

FIG. 21 is a schematic view of a water-soluble resin material printing unit provided by the disclosure.

FIG. 22 is a schematic view of a fiber-reinforced composite material printing unit provided by the disclosure.

In the accompanying drawings, the same reference numerals are used to represent identical or similar elements or structures, where:

1: control unit, 11: host computer, 12: communication cable, 2: movement execution unit, 21: robot, 22: turntable, A: printing unit group, 3: fiber placement unit, 4: water-soluble resin material printing unit, 5: fiber-reinforced composite material printing unit, 31: feeding mechanism, 32: lining paper recovery mechanism, 33: tow guiding mechanism, 34:

tow clamping mechanism, 35: tow re-transporting mechanism, 36: tow shearing mechanism, 37: pressure roller mechanism, 38: laser heater, 39: image collector, 311: material fiber storage, 312: fiber storage sleeve, 313: tension monitor, 314: fiber storage remaining amount monitor, 321: lining paper recovery sleeve, 331, 332, and 333: guiding wheel, 341, 351, and 361: cylinder, 342: clamping wheel, 352: transporting roller, 353: driving motor, 362: cutter, 363: tow clamping plate, 364: tow material outage monitor, 371: pressure roller, 372: constant pressure monitor, 373: pressure cylinder, 381: laser output device, 382: temperature monitor, 383: laser output device clamping plate, 391: camera, 392: image processing and analysis device,

41: feeding mechanism, 42: nozzle lifting mechanism, 43: extrusion mechanism, 44: tow guiding mechanism, 45: image collector, 411: water-soluble resin material fiber storage, 412: fiber storage remaining amount monitor, 421: lead screw, 422: driving motor, 423: nozzle connecting plate, 424: sliding rail block, 431: heating block, 432: heat sink, 433: fan, 434: extrusion screw, 435: nozzle, 436: material outage monitor, 437: temperature detector, 438: tow flow rate adjustment device, 439: gear, 440: driving motor, 441: guiding pulley, 442: driving motor, 451: camera, 452: image processing and analysis device,

51: feeding mechanism, 52: nozzle lifting mechanism, 53: extrusion mechanism, 54: image collector, 511: material fiber storage, 512: fiber storage remaining amount monitor, 521: lead screw, 522: driving motor, 523: nozzle connecting plate, 531: heating block, 532: heat sink, 533: fan, 534: extrusion gear, 535: nozzle, 536: material outage monitor, 537: temperature monitor, 538: driving motor, 541: camera, 542: image processing and analysis device.

## DESCRIPTION OF THE EMBODIMENTS

In order to make the objectives, technical solutions, and advantages of the disclosure clearer and more comprehensible, the disclosure is further described in detail with reference to the drawings and embodiments. It should be understood that the specific embodiments described herein serve to explain the invention merely and are not used to limit the invention. In addition, the technical features involved in the various embodiments of the invention described below can be combined with each other as long as the technical features do not conflict with each other.

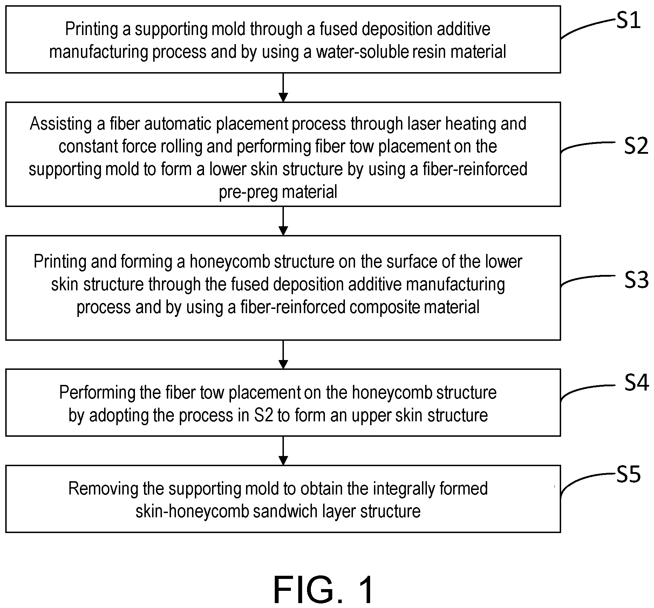

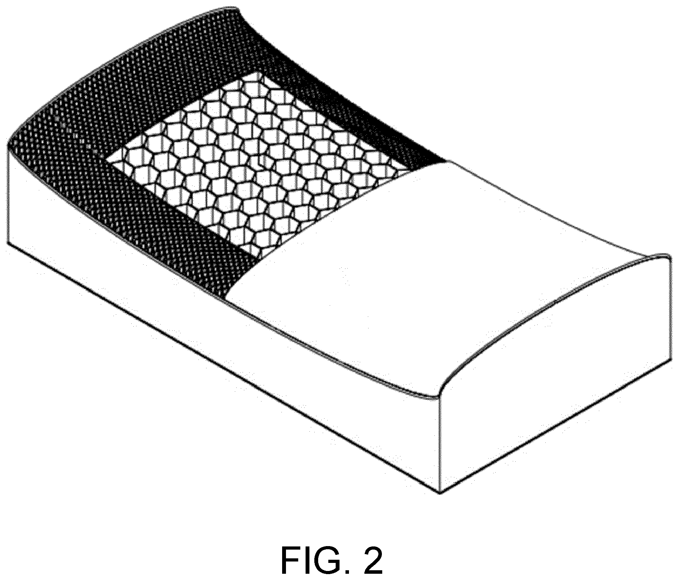

With reference to FIG. 1 and FIG. 2, the disclosure provides an additive manufacturing method for a complex structure of a fiber-reinforced composite material, where the complex structure is a skin-honeycomb sandwich layer structure and the like. As shown in FIG. 2, the skin-honeycomb sandwich layer structure includes a lower skin structure, an upper skin structure, and a honeycomb structure arranged in a middle sandwich layer. The manufacturing method includes the following steps.

In S1, a supporting mold is printed through a fused deposition additive manufacturing process and by using a water-soluble resin material.

In S2, a fiber automatic placement process is assisted through laser heating and constant force rolling, and fiber tow placement is performed on the supporting mold to form the lower skin structure by using a fiber-reinforced pre-preg material.

In S3, a honeycomb structure is printed and formed on the surface of the lower skin structure through the fused deposition additive manufacturing process and by using the fiber-reinforced composite material.

In S4, the fiber tow placement is performed on the honeycomb structure by adopting the process in S2 to form the upper skin structure.

In S5, the supporting mold is removed to obtain the integrally-formed skin-honeycomb sandwich layer structure.

The manufacturing method provided by the disclosure uses an additive manufacturing method to integrally form the skin-honeycomb sandwich layer structure. The honeycomb structure is directly formed on the surface of the lower skin structure by printing, and the upper skin structure is directly formed on the honeycomb structure. In this way, the process of aligning and bonding a skin structure and a honeycomb sandwich layer requiring manual labor or machines in the related art can be eliminated, and the problems of inaccurate alignment and loose connection between the honeycomb structure and the skin structure in the relater art are solved. As such, labor intensity is lowered, the level of automation of the production process is improved, the accuracy of molded parts is enhanced, the level of integration of molded parts is improved, and the strength and quality stability of molded parts are further improved.

Further, in the additive manufacturing method for the complex structure of the fiber-reinforced composite material provided by the disclosure, before the skin structure and honeycomb structure are printed, the supporting mold is printed with the water-soluble resin material, and the lower skin structure is automatically placed and treated as a surface to be molded by using the fiber-reinforced resin pre-preg material. That is, the skin structure is formed by automatically placing a fiber tow through a corresponding fiber placement unit. The fiber-reinforced resin matrix composite material is then used to print the honeycomb structure on the surface to be molded. The fiber-reinforced resin pre-preg material is then placed on the honeycomb structure to form the upper skin structure to produce a molded part, and finally, a water-soluble resin mold is removed through a special dissolving solution.

In the additive manufacturing method for the complex structure provided by the disclosure, it is proposed to first use the water-soluble resin material to print and form the supporting mold and remove the supporting mold at last. In this way, the problems of difficulty in custom mold iteration and mold customization in the current fiber placement technology are solved. In the manufacturing method, the integrated skin-honeycomb sandwich layer structure is manufactured through additive manufacturing, so that the automation level of preparing skin-honeycomb sandwich layer structure parts is improved, labor costs are saved, and production costs are reduced. Further, the fiber-reinforced resin matrix composite material skin-honeycomb sandwich complex structural parts prepared by the disclosure can replace more metal parts in the aerospace field due to the integrated molding. In this way, the weight of aerospace equipment is reduced and the mechanical and mechanics properties of the equipment are significantly improved.

Moreover, the fiber-reinforced composite material complex structural parts prepared by this additive manufacturing method are not only suitable for the aerospace field, but also for high-end automobiles and sporting goods, and are not specifically limited.

Further, before S 1 is performed, the following is also included. Printing information of the skin-honeycomb sandwich layer structure is inputted into a host computer, and a material fiber storage is placed according to a result generated by the host computer. A printing table and a printing nozzle are preheated to a specified temperature, and a monitoring system is turned on. The printing information of the skin-honeycomb sandwich layer structure can include data information such as a three-dimensional model of a printed part, application requirements, and performance indicators. The host computer can generate a material type required for printing based on the printing information and then place the corresponding material fiber storage. Next, the printing table and printing nozzle need to be preheated to prepare for printing. In addition, the monitoring system may be set up to monitor the printing process in real-time during the printing process, and the monitoring system should be turned on before printing starts.

Further, the fiber-reinforced composite material includes at least one of carbon fiber-reinforced resin matrix composite material, a glass fiber-reinforced resin matrix composite material, and a boron fiber-reinforced resin matrix composite material. The fiber-reinforced composite material includes but is not limited to carbon fiber, glass fiber, boron fiber, and other fiber-reinforced resin matrix composite materials. The fiber-reinforced pre-preg material includes but is not limited to carbon fiber, glass fiber, boron fiber, and other fiber-reinforced resin matrix pre-preg materials.

Further, the upper surface of the supporting mold in S1 is a curved surface structure, and S1 specifically includes the following.

In S11, a variation feature of the curved surface structure is extracted, a three-dimensional model of the supporting mold is sliced and layered in a direction from a lower surface to the upper surface, and each sliced layer is set as a curved surface. A curved surface variation feature of each of the sliced layers is consistent with the variation feature of the curved surface structure.

In S12, each of the sliced layers is sequentially printed in the direction from the lower surface to the upper surface.

In order to achieve high-accuracy printing of the water-soluble resin material supporting mold with a curved surface structure, the disclosure provides a novel slicing printing method, and a specific process of the slicing method is provided as follows.

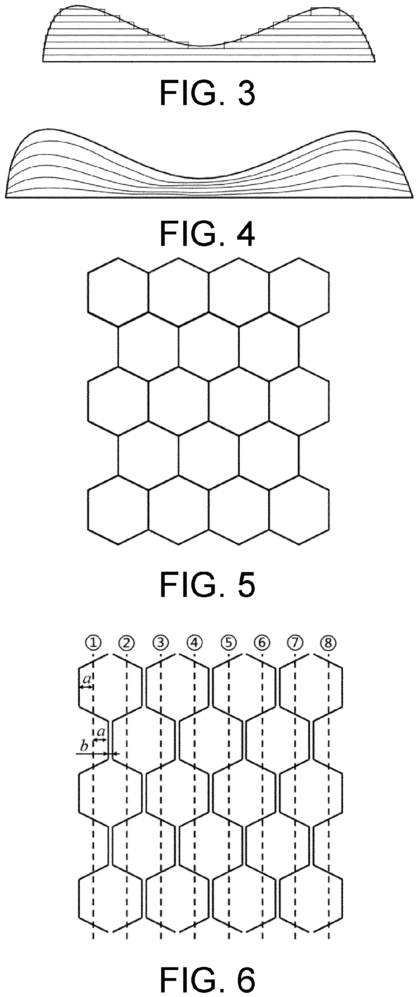

When it is necessary to print a water-soluble resin-supporting mold with a curved surface, if the conventional plane slicing method is used, as shown in FIG. 3, the printed mold structure will be affected by the surface step effect and have the defect of poor surface quality. The molding accuracy of subsequent parts will thus be greatly affected. When printing the curved surface of a large mold, in order to ensure the printing accuracy of the mold, the slice thickness needs to be reduced in the conventional method, which will lead to a reduction in printing efficiency. In order to improve the defect of the current slicing method, an innovative slicing method is provided. When slicing is performed, a geometric feature of a surface of a curved surface, that is, the variation feature, is extracted first, which can be understood as the trend of the surface. When slicing is performed, each sliced layer is curved. Each curved sliced layer is an approximation of the corresponding structure of the curved surface and after several layers of similar slices are superimposed, a highly smooth surface required by the resin-supporting mold is formed, as shown in FIG. 4.

Further, the description of the upper surface and the lower surface in this embodiment is based on the orientation shown in FIG. 3 and FIG. 4. In practical applications, the curved surface structure is not limited to being provided on the upper surface of the supporting mold. The curved surface structure may also be provided in other directions of the supporting mold and is not specifically limited.

Furthermore, the disclosure provides a variable flow rate printing method under this slicing method. That is, S12 specifically includes the following. When any of the sliced layers is printed, a discharge flow rate for printing in real-time is adjusted according to the thickness variation of the sliced layer, so that the discharge flow rate of a thicker portion is greater than the discharge flow rate of a thinner portion.

To be specific, an extruded material flow rate, that is, the discharge flow rate, of the printing nozzle, may be adjusted in real-time according to a thickness of the sliced layer in the variable flow rate printing method, and the printing method specifically includes the following.

During printing, an extrusion flow rate of a water-soluble resin material melt is adjusted according to a surface adaptive slicing method. Where the thickness of the sliced layer is large, the extrusion flow rate of the nozzle is increased to improve the part molding efficiency. Where the thickness of the sliced layer is small, the extrusion flow rate of the nozzle is reduced to ensure the continuity of the printing process, that is, the continuity of the material discharge.

Further, S12 also includes the following. A discharge direction is controlled to always be in a normal direction of the surface of a molded part during printing. That is, a print head may be controlled in conjunction with the movement of the robot during printing. In this way, a printing direction is always in the normal direction of the surface of the molded part, the step effect on a molded surface is reduced, the molding accuracy of the molded surface is improved, and a mold with a highly smooth surface is obtained.

Further, S12 also includes the following. When the sliced layer away from the curved surface is printed, printing is controlled at a discharge speed of a first flow rate. When the sliced layer close to the curved surface is printed, printing is controlled at a discharge speed of a second flow rate. Herein, the first flow rate is greater than the second flow rate.

That is, the variable flow rate printing method provided by the disclosure also proposes to print with a greater discharge flow rate when printing the sliced layer far away from the curved surface and to print with a smaller discharge flow rate when printing the sliced layer close to the curved surface. Considering that the printing accuracy requirements for a part far away from the curved surface are lower than the printing accuracy requirements for a part close to the curved surface in the disclosure, it is proposed that the part with low printing accuracy requirements may be printed with a greater discharge flow rate to improve efficiency, and the part with high printing accuracy requirements may be printed with a smaller discharge flow rate to improve accuracy.

Further, a path-filling algorithm of the honeycomb structure in S3 specifically includes the following.

In S31, periodic processing is performed on a planar structure of the honeycomb structure, and the planar structure is divided into a plurality of repeated units arranged sequentially in an X direction.

In S32, each of the repeated units is symmetrically divided, where a line of symmetry is in a Y direction, such that each of the repeated units includes an odd-numbered curve segment and an even-numbered curve segment.

In S33, the odd-numbered curve segment and the even-numbered curve segment in any of the repeated units are periodically divided in the Y direction, and a coordinate path of each periodic line segment is analyzed, so that the coordinate paths of both the odd-numbered curve segment and the even-numbered curve segment in any of the repeated units are obtained.

In S34, the coordinate paths of both the odd-numbered curve segment and the even-numbered curve segment in any of the repeated units are obtained according to a gap between different repeated units.

Take the honeycomb structure formed by hexagons adjacent to one another as an example. With reference to FIG. 5, the planar structure of the honeycomb structure is a cross-sectional schematic diagram. During printing, the honeycomb structure is formed by stacking the planar structures. In order to facilitate the acquisition of a printing path, the planar structure may be divided periodically in the X direction, and the planar structure may be divided into repeated units arranged sequentially in the X direction. Therefore, for different repeated units, the path variation is the coordinates in the X direction, and the coordinates in the Y direction are cyclically invariant. From this, the path of a single repeated unit may be obtained, and thus the path of the entire planar structure may be obtained. For example, with reference to Figure 6, a curve ① and a curve ② form a periodic shape, and subsequent paths are to be repeatedly generated with this periodic shape.

Further, each repeated unit is divided symmetrically, and each repeated unit is divided into two curves that are symmetrical about the Y direction. Therefore, each repeated unit includes one odd-numbered curve segment and one even-numbered curve segment. The coordinates of the odd-numbered curve segments in different repeated units in the Y direction are consistent, and the coordinates of the even-numbered curve segments in different repeated units in the Y direction are consistent. Therefore, the planar structure is the repeated generation of the odd-numbered curve segments in the X direction and the repeated generation of even-numbered curve segments in the X direction. For example, with reference to FIG. 6, ①, ③, (5), ⑦... curves are used to form an odd number of curves, and (2), ④, ⑥, ⑧... curves are used to form an even number of curves. Paths are generated through the transformation of the odd-numbered and even-numbered lines. In this way, the odd-numbered curve segments and the even-numbered curve segments are both paths extending in the Y direction, which facilitates printing and is beneficial to improving printing efficiency and molded part quality.

Further, the coordinate path of one of the repeated units in the planar structure may be obtained. As such, since multiple repeated units are periodically arranged in the X direction, the coordinate path of any repeated unit may be extended and obtained according to the gap between different repeated units, and the honeycomb structure may then be printed and obtained. When obtaining the coordinate path of one of the repeated units, the coordinate path of the odd-numbered curve segment and the coordinate path of the even-numbered curve segment may be obtained. For either the odd-numbered curve segments or the even-numbered curve segments, periodic division may be performed in the Y direction. By dividing the curve segment into several periodic line segments arranged periodically in the Y direction, the coordinate path of one periodic line segment is obtained, so that the coordinate path of the entire curve segment may be obtained. For each periodic line segment, the coordinate path of a single periodic line segment may be obtained based on a specific shape feature of the honeycomb structure and a specific set position of a coordinate origin. The coordinate paths of the odd-numbered curve segment and the even-numbered curve segment may then be obtained by extending in the Y direction. By extending the odd-numbered curve segment and the even-numbered curve segment in the X direction, the planar structure may be obtained.

Further, for any repeated unit, when symmetrical division is performed to form odd-numbered curve segments and even-numbered curve segments, it can be set that the odd-numbered curve segments and the even-numbered curve segments are arranged at intervals. Further, a minimum gap between the odd-numbered curve segments and the even-numbered curve segments is a filled line width during printing. As such, during printing, since the filled line width is the same as the minimum gap, the odd-numbered curve segments and even-numbered curve segments are ultimately connected when printing is completed, so that a closely connected planar structure is formed.

To be specific, taking the honeycomb structure formed by hexagons adjacent to one another as an example, a honeycomb structure filling algorithm is provided, and the algorithm includes the following process.

The schematic diagram of honeycomb path filling is shown in FIG. 5, and its structure is formed by regular hexagons adjacent to one another. In order to implement the honeycomb-filling algorithm, a honeycomb-filling path needs to be periodized, and the honeycomb path may be generated repeatedly from the repeated units. Next, each repeated unit is divided symmetrically, and the repeated unit is formed by an odd-numbered curve segment (left) and an even-numbered curve segment (right), as shown in FIG. 6. The curve ① and the curve ② form a periodic shape, and subsequent paths are repeatedly generated with this periodic shape. Further, the ①, ③, (5), ⑦... curves are used to form an odd number of curves, and the ②, ④, ⑥, ⑧... curves are used to form an even number of curves. The paths are generated through the transformation of the odd-numbered and even-numbered lines.

Further, for each of the curve segments (including the odd-numbered curve segment and the even-numbered curve segments), a reference axis in the Y direction may be used as a middle axis. Taking the middle axis as an example, in curve ① as shown in FIG. 6, a dotted axis is a middle axis, and a distance between the middle axis and the left and right vertical segments in curve ① is a. A distance between two adjacent vertical straight segments of the curve ② and curve ①, that is, the odd-numbered curve segment and the even-numbered curve segment is b, so the distance between the middle axes is 2a+b. Therefore, a middle axis is drawn at an interval of 2a+b in a horizontal direction, and based on the middle axis, different transformations are made to the odd-numbered and even-numbered curve segments to design the honeycomb structure.

Further, with the horizontal direction as the X direction and a vertical direction as the Y direction, periodic division is performed on the odd-numbered curve segment or the even-numbered curve segment with $T_y = \dfrac{12a}{\sqrt{3}}$ as the period. Each curve segment may be regarded as a periodic line segment that is formed by periodic extension. Regarding one of the periodic line segments, a rectangular coordinate system is established with the horizontal line where an initial point is located as the X-axis and with the middle axis as the Y-axis, and the algorithm increases in the Y direction. The coordinate equation of any segment on the periodic line segment is then obtained, and the coordinate path of the periodic line segment may be obtained.

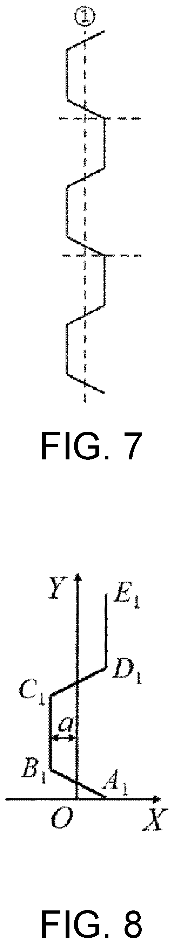

The algorithm is designed with the odd-numbered curve segment ① as the goal, and periodic division is performed on the curve segment. As shown in FIG. 7, the curve part between the horizontal dotted lines is one period. One periodic line segment of the odd-numbered curve segment is analyzed. As shown in FIG. 8, the rectangular coordinate system is established with the horizontal line where the initial point is located as the X-axis and with the middle axis as the Y-axis, and the algorithm increases in the Y direction , so that line segments $A_1B_1$, $B_1C_1$, CiDi, and $D_1E_1$ may all be

represented by Y-direction coordinates. For the $A_1B_1$ line segment, since $x_{A1} - x_{B1} = 2\alpha$, when $0 \leq y \leq \dfrac{2a}{\sqrt{3}}$, that is, the

$A_1B_1$ line segment, the X-direction coordinate of any point on it is $x_{A_1B_1} = -\sqrt{3}\left(y - \dfrac{a}{\sqrt{3}}\right)$. When $\dfrac{2a}{\sqrt{3}} < y \leq \dfrac{6a}{\sqrt{3}}$, it is the

$B_1C_1$ line segment, and the coordinates of any point on it are $x_{B_1C_1} = -a$. When $\dfrac{6a}{\sqrt{3}} < y \leq \dfrac{8a}{\sqrt{3}}$, it is the $C_1D_1$ line segment,

and the coordinates of any point on it are $x_{C_1D_1} = \sqrt{3}\left(y - \dfrac{7a}{\sqrt{3}}\right)$. When $\dfrac{8a}{\sqrt{3}} < y \leq \dfrac{12a}{\sqrt{3}}$, it is the line segment $D_1E_1$, and

the coordinates of any point on it are $x_{D_1E_1} = a$. The periodic extension is carried out with the Y-direction period $T_y = \dfrac{12a}{\sqrt{3}}$, and the curve ① is formed.

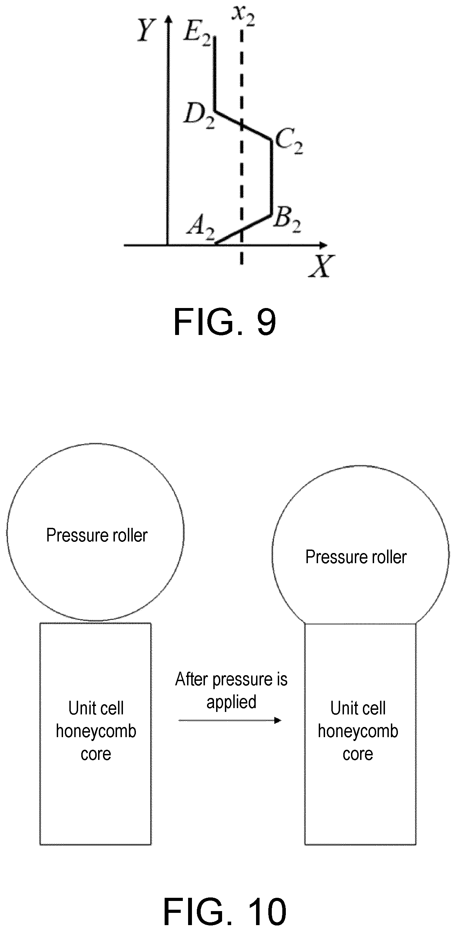

Further, for the even-numbered curve segment (2), as shown in FIG. 9, the X-direction coordinate of the middle axis is $x_2 = 2a+b$. For a single period, when $0 \leq y \leq \dfrac{2a}{\sqrt{3}}$, that is, the line segment $A_2B_2$, the X-direction coordinate of any point on it is $x_{A_2B_2}=\sqrt{3}\left(y-\frac{a}{\sqrt{3}}\right)+x_2$. When $\frac{2a}{\sqrt{3}}<y\le\frac{6a}{\sqrt{3}}$, it is the $B_2C_2$ line segment, and the coordinates of any point on it are $x_{B_2C_2}=a+x_2$. When $\frac{6a}{\sqrt{3}}<y\le\frac{8a}{\sqrt{3}}$, it is the $C_2D_2$ line segment, and the coordinates of any point on it are

$x_{C_2D_2}=-\sqrt{3}\left(y-\frac{7a}{\sqrt{3}}\right)+x_2$. When $\frac{8a}{\sqrt{3}}<y\le\frac{12a}{\sqrt{3}}$, it is the line segment $D_2E_2$, and the coordinates of any point on it are

$x_{D_2E_2}=-a+x_2$. The periodic extension is carried out with the Y-direction period $T_y=\frac{12a}{\sqrt{3}}$, and the curve ② is formed.

Further, for a $n^{th}$ curve, the X-direction coordinate of the middle axis is $x_n=(2a+b)(n-1)$, and when

$0\le y\le\frac{2a}{\sqrt{3}}$, $x=(-1)^n\sqrt{3}\left(y-\frac{a}{\sqrt{3}}\right)+x_n$, when $\frac{2a}{\sqrt{3}}<y\le\frac{6a}{\sqrt{3}}$, $x=(-1)^{(n-1)}a+x_n$, when

$\frac{6a}{\sqrt{3}}<y\le\frac{8a}{\sqrt{3}}$, $x=(-1)^{(n-1)}\sqrt{3}\left(y-\frac{7a}{\sqrt{3}}\right)+x_2$, and when $\frac{8a}{\sqrt{3}}<y\le\frac{12a}{\sqrt{3}}$, $x=(-1)^n a+x_n$. The periodic extension is carried out with the Y-direction period $T_y=\frac{12a}{\sqrt{3}}$, and the $n^{th}$ curve is formed.

Using the above method to periodically extend the Y and X directions, the honeycomb structure may be formed. In particular, a parameter involved in the algorithm is half a line gap of filled lines, and a parameter b is a line width of the filled lines.

Further, S2 and S4 specifically include the following. The fiber tow placement is performed through laser heating, a compaction operation is performed during the fiber tow placement process by using a pressure roller, and a real-time placement pressure exerted by the pressure roller is monitored, so that the real-time placement pressure is consistent with a predetermined placement pressure.

That is, laser heating and constant force rolling are used to assist in the fiber tow placement. Laser heating is helpful to make the fiber tow more evenly heated and improve fiber placement efficiency. Constant force rolling uses constant placement pressure to roll the placed fiber tow, which is conducive to better ensuring the forming quality of the skin structure, especially for the rolling of the upper skin structure. The use of constant force rolling is beneficial to protecting the honeycomb structure and avoiding damage to the honeycomb structure caused by the rolling compaction operation. To be specific, a pressure sensor may be installed on a pressure transmission path from a driving structure of the pressure roller to the pressure roller, which can monitor the real-time placement pressure exerted by the pressure roller in real-time and adjust the pressure of the pressure roller in real-time according to the predetermined placement pressure so that the real-time placement pressure is consistent with the predetermined placement pressure to achieve constant force compaction.

Further, the predetermined placement pressure is the designed pressure value exerted by the driving structure of the pressure roller on the pressure roller. In the actual pressure roller pressure control, it is necessary to control the pressure exerted by the driving structure on the pressure roller according to the predetermined placement pressure. The method of obtaining the predetermined placement pressure includes the following.

A pressure formed by deformation of the pressure roller when the pressure roller compacts the fiber tow is obtained according to the shape information and material information of the pressure roller.

A functional relationship between the real-time placement pressure exerted by the pressure roller, the pressure formed by the deformation of the pressure roller, and the actual pressure of the fiber tow is obtained.

The predetermined placement pressure is obtained according to the functional relationship and a predetermined pressure of the fiber tow.

The pressure roller used in the disclosure is a flexible pressure roller, that is, the surface of the pressure roller has a flexible deformable layer. With reference to FIG. 10, in the disclosure, considering that when the pressure roller compacts the fiber tow, the surface of the pressure roller undergoes a certain deformation, and the deformation on the surface of the pressure roller consumes an additional part of the pressure exerted by the driving structure on the pressure roller. That is, not all of the pressure exerted by the driving structure on the pressure roller is transmitted to the surface of the fiber tow, but a small part causes deformation of the surface of the pressure roller. When the compaction operation is performed on the fiber tow, a predetermined pressure value is designed most of the time to be applied to the fiber tow, and the fiber tow can achieve better compaction under this predetermined pressure value. At present, the predetermined pressure value is used directly to control the pressure exerted by the driving structure on the pressure roller most of the time, while the presence of a deformation pressure of the pressure roller is ignored. As such, the actual pressure applied to the surface of the fiber tow is often less than the predetermined pressure value, resulting in the failure to fully achieve the expected compaction effect.

The disclosure proposes that the pressure caused by the deformation of the pressure roller may be calculated and obtained based on a deformation parameter of the pressure roller when the fiber tow is compacted, a shape parameter, and a material parameter of the pressure roller. In this way, when the pressure is applied to the pressure roller, this partial pressure and the predetermined pressure may be considered, so that the final pressure value applied by the pressure roller to the fiber tow is consistent with the predetermined pressure to obtain the expected compaction effect.

Further, the functional relationship among a real-time placement pressure P exerted by the pressure roller, a pressure Fi formed by the deformation of the pressure roller, and an actual pressure F of the fiber tow is: P=F+Fi.

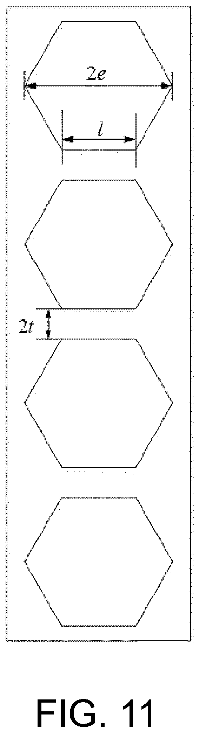

Further, the surface of the pressure roller is provided with a honeycomb cross-section shape, and the honeycomb cross-section shape is fitted with the honeycomb structure. The pressure roller used is a flexible pressure roller, and the surface has a honeycomb-shaped cross-section to avoid depression of the fiber tow on the surface of the honeycomb hollow structure when the upper skin structure is compacted. The surface of the pressure roller has a honeycomb-shaped cross-section, that is, a cross-section corresponding to the honeycomb structure, which can achieve the perfect fit with a honeycomb core without causing the hollow part of the honeycomb core to sink due to pressure, as shown in FIG. 11. When the fiber is placed and compacted by the press roller, the position is calibrated by a CCD camera, the pressure sensor monitors the constant pressure, and the honeycomb cross-section on the surface of the pressure roller is aligned with a boundary of the formed honeycomb structure, and compaction is then performed. In this way, the load-bearing capacity of the skin-honeycomb sandwich layer structure may be effectively enhanced.

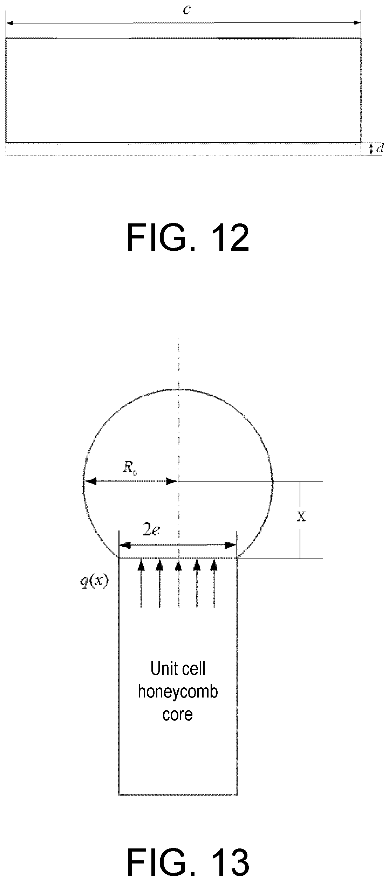

Further, when the driving structure may be a cylinder that applies pressure to the pressure roller and when the pressure roller rolls downwards, the surface of the pressure roller is pressed flush with a top portion of the honeycomb core, causing a certain compression deformation on the surface of the pressure roller, as shown in FIG. 12 and FIG. 13. During the contact process between the flexible pressure roller and a fiber tow base material, it is assumed that there is no tension in a contact surface and there is no adhesion when the contracting parties separate, which can be regarded as the non-adhesive elastic contact theory in the classical contact theory. During the skin placement process, the force that causes the flexible pressure roller to deform is shown in FIG. 12 and FIG. 13, the solid line represents the outline of the flexible pressure roller under pressure, d is the relatively small deformation of the pressure roller, c is the axial width of the flexible pressure roller, q(x) is the distributed line pressure of the flexible pressure roller on the contact surface of the unit cell honeycomb core width 2e. Assuming that the elastic modulus of the material used in the flexible pressure roller is E and Poisson's ratio is v, and it is calculated based on the non-adhesive elastic contact theory, then:

$$q(x) = \frac{2F_1\sqrt{e^2 - x^2}}{\pi c e^2};$$

$$k = \frac{1-v^2}{E} = \frac{1}{E^*};$$

and

$$e = \sqrt{\frac{4R_0 k}{\pi}\frac{F_1}{2ce}};$$

where q(x) is the distribution line pressure when the flexible pressure roller contacts the rigid body and deforms, Fi is the pressure formed by the deformation of the pressure roller, e is the deformation width of the flexible pressure roller, x is the distance between the pressure of the pressure roller deformation distribution line and the center point, E is the elastic modulus of the pressure roller material, $E^*$ is the equivalent elastic modulus of the pressure roller, and $R_0$ is the radius of the pressure roller.

According to FIG. 13, it can be obtained from the geometric relationship: $(R_0-d)^2+e^2=R_0^2$.

To simplify the calculation, assuming that the pressure $F_1$ is evenly distributed on the contact surface ($q_0$ is the average value of the pressure q(x)), then the pressure $F_1$ caused by the deformation of the pressure roller is:

$$F_1 = 2q_0 e = \frac{\pi c(2R_0 d - d^2)}{4kR_0}$$

Therefore, the functional relationship among the pressure Fi caused by the deformation of the pressure roller, the real-time placement pressure P, and the actual pressure F on the pre-preg fiber tow is:

$$P = F + F_1 = F + 2q_0 e = F + \frac{\pi c(2R_0 d - d^2)E^*}{4R_0}.$$

Therefore, after the actual pressure F, that is, the predetermined pressure, expected to be received by the fiber tow is set, the real-time placement pressure P, that is, the predetermined placement pressure, that needs to be applied by the pressure roller, can be calculated through the above formula. During the actual control process of the pressure roller, the pressure exerted by the pressure roller is controlled, so that the real-time placement pressure reaches P and remains constant. Through the real-time monitoring of the placement pressure of the anti-collapse roller and the arrangement of the pressure roller cross-section, the collapse of the hollow part of the honeycomb structure that occurs during the skin placement process may be effectively reduced, and the mechanical properties and surface quality of the skin-honeycomb structure parts may be effectively improved.

Further, the fiber tow placement performed in S2 and S4 specifically includes the following.

The number of fiber tows in a location with a small curvature is increased, and the number of fiber tows in a location with a large curvature is reduced. When fiber placement is performed in steps S2 and S4, the number of fiber tows may be changed and regulated in real-time as the curvature of the skin structure changes, where the number of fiber tows ranges from 1 to 32. When the fiber tow placement in steps S2 and S4 is performed, the number of placed tows may be changed and regulated in real-time as the skin structure changes. Where the curvature of the skin structure is small, the degree of curving of the skin structure is small, and the number of delivering the tows may be increased accordingly, up to 32 tows, to improve the efficiency of tow placement. Where the curvature of the skin structure is large, the degree of curving of the skin structure is large, the tow shearing mechanism and the pressing mechanism may be used to control the excess tows from being delivered, reduce the number of tows, and ensure printing accuracy.

Further, the process from S1 to S4 further includes the following.

The printing process is monitored in real-time, and it is selected to continue printing, repair printing, or terminate printing according to a monitoring result. A camera may be set up above the printing table. During the printing process, the camera is used to collect images of the surface of the molded part and analyze whether there are printing defects, such as gaps, slits, bubbles, and other defects. Based on an analysis result, when the surface quality of the molded part is good, the process of continuing printing is selected. When there is a printing defect and the degree of the defect is small, repairing printing is selected to repeat printing at the defective area. When there is a printing defect and the defect is too severe to be repaired, terminating printing is selected. Real-time monitoring of the printing process helps improve the success rate of printing.

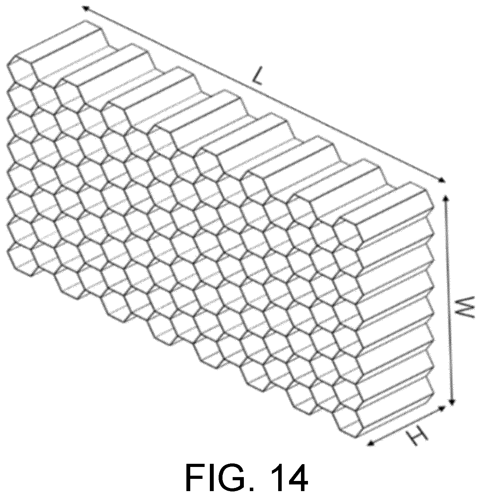

Further, with reference to FIG. 11, the honeycomb cross-section arranged on the surface of the pressure roller is consistent with the shape and size of the honeycomb structure. In this way, when the pressure roller compacts the upper skin structure, the honeycomb cross-section on the surface of the pressure roller may overlap the honeycomb core, so that the connection and compaction between the upper skin structure and the honeycomb structure is more favorably achieved. For a single honeycomb core, a thickness t is much smaller than a frame length 1, so some calculations may be simplified. With reference to FIG. 14, when the honeycomb structure is a regular hexagonal honeycomb core, the H-direction compression modulus of the regular hexagonal honeycomb core directly reflects the out-of-plane load-bearing capacity determined by the load-bearing area dose. The formula is as follows:

$$E_f = 1.54 \frac{t}{l} E_s ;$$

where $E_f$ is the compression modulus of the honeycomb core, t is the thickness of the honeycomb wall material, 1 is the side length of the regular hexagonal honeycomb core grid, and $E_s$ is the elastic modulus of the manufacturing material of the honeycomb core.

The L-direction shear modulus of the regular hexagonal honeycomb core is expressed as:

$$G_L = 0.433 \frac{E_s t}{l(1 + v_f)}.$$

The W-direction shear modulus of the regular hexagonal honeycomb core is expressed as:

$$G_W = 0.289 \frac{E_s t}{l(1+v_f)};$$

where $G_L$ is the shear modulus of the honeycomb core in the L direction (the direction parallel to the skin direction), Gw is the shear modulus of the honeycomb core in the W direction (perpendicular to the H and L directions), and $v_f$ is the Poisson's ratio of the honeycomb core manufacturing material.

The honeycomb core compressive strength $\sigma_c$ is expressed as:

$$\sigma_c = \frac{8}{3\sqrt{3}} \frac{t}{l} \sigma;$$

where $\sigma$ is the critical stress of the honeycomb wall, which is the critical buckling load value of the honeycomb core.

Further, the honeycomb structure in the skin-honeycomb sandwich layer structure may be designed with the honeycomb wall material thickness t, the honeycomb core grid side length 1, and honeycomb wall material, so that the compression modulus, shear modulus, and compressive strength of the honeycomb structure are within the predetermined ranges. To be specific, calculation and design may be carried out according to the above formulas of the compression modulus, the shear modulus, and the compressive strength to obtain a honeycomb structure with good performance.

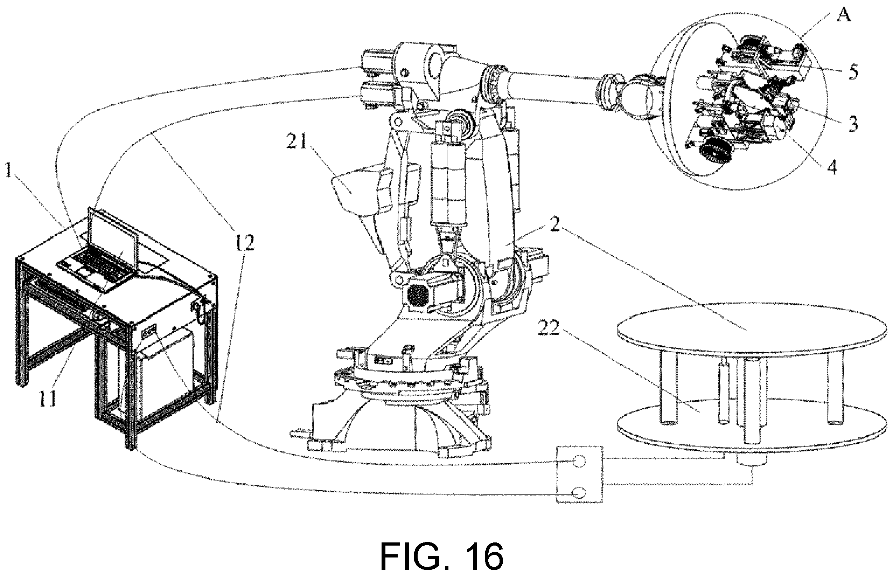

Further, the disclosure provides an additive manufacturing device for a complex structure of a fiber-reinforced composite material. The manufacturing device for the complex structure of the fiber-reinforced composite material is configured to implement the additive manufacturing method for the complex structure of the fiber-reinforced composite material. With reference to FIG. 16, the additive manufacturing device includes a host computer 11, a robot 21, a turntable 22, and a printing unit group A. The robot 21, the turntable 22, and the printing unit group A are electrically connected to the host computer 11, that is, the signal connection can be connected through a signal line. The printing unit group A is mechanically connected to robot 21. The printing unit group A includes a fiber placement unit 3, a water-soluble resin material printing unit 4, and a fiber-reinforced composite material printing unit 5.

The host computer in this additive manufacturing device is used for comprehensive control of the additive manufacturing device. The host computer may control the robot to move in three dimensions to drive the printing unit group to move in three dimensions. The turntable is a printing table used to support a printed molded part. The host computer may control the turntable to move with multiple degrees of freedom, and the host computer may also control the printing unit group to perform a printing operation. The printing unit group is integrated with the fiber placement unit for fiber tow placement to form the upper skin structure and the lower skin structure. The water-soluble resin material printing unit is configured to achieve variable flow printing of the supporting mold. The fiber-reinforced composite printing unit is configured to continuously print the fiber-reinforced resin matrix composite material to form the honeycomb structure. The additive manufacturing device is integrated with three printing units, which can sequentially print the supporting mold, the skin structure, and the honeycomb structure to form the skin-honeycomb sandwich layer structure. In this way, the replacement of the print head may be eliminated and the operation is convenient.

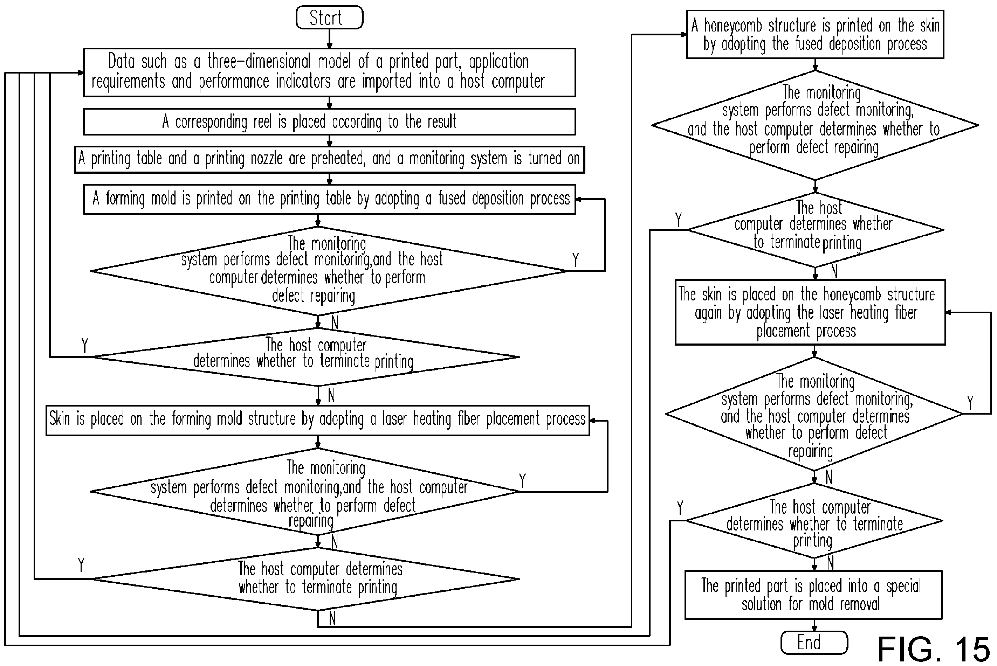

Further, in view of the fact that at present, there is no method that can efficiently manufacture a high-quality large-scale skin-honeycomb sandwich layer structure part that meets the requirements, the disclosure provides an effective additive manufacturing method and device for a complex structure of a continuous fiber-reinforced resin matrix composite material for a large-scale skin-honeycomb sandwich layer structure part for aerospace. A complex part of the continuous fiber-reinforced resin matrix composite material such as a large skin-honeycomb sandwich layer structure for aerospace use may be quickly manufactured without specific molds. Compared to a conventional continuous fiber composite part manufacturing method, part manufacturing time and costs may be significantly decreased while ensuring the mechanical properties. In an additive manufacturing method for a complex structure of a continuous fiber-reinforced resin matrix composite material provided by the disclosure, a complex skin-honeycomb sandwich layer structure part as shown in FIG. 2 is printed. With reference to FIG. 15, the method includes the following steps.

Data such as the three-dimensional model of the printed part, application requirements, and performance indicators are imported into the host computer. According to the result generated by the host computer, a corresponding material fiber storage is placed. The printing table and the printing nozzle begin to be preheated to the specified temperature, and the monitoring system starts to work.

The fused deposition modeling process is used, and a water-soluble resin roll is used on a multi-degree-of-freedom heated turntable to print the forming mold, that is, the supporting mold.

Laser heating and constant force rolling are used to assist the fiber placement process. The selected continuous fiber-reinforced resin matrix composite material fiber storage is used to place the fiber tow on the forming mold to form the lower skin structure.

The fused deposition process is used to print the honeycomb structure on the surface to be molded using the continuous fiber-reinforced resin matrix composite material fiber storage selected at the beginning.

Laser heating and constant force rolling are continuously used to assist the fiber placement process. The fiber tow is placed again on the honeycomb structure to form the upper skin structure.

During each of the above printing steps, the monitoring system monitors printing defects in real-time and transmits data to the host computer, and the host computer then decides independently whether to repair or terminate printing. During the whole process of part printing, the printing process is monitored in real-time by a monitoring system including a CCD camera and temperature and mechanics sensors and the like integrated with a deep learning algorithm. The monitoring system communicates with the host computer in real-time and decides independently whether to repair defects or terminate printing.

After the part is printed, the part is put into a special dissolving solution to remove the water-soluble resin mold.

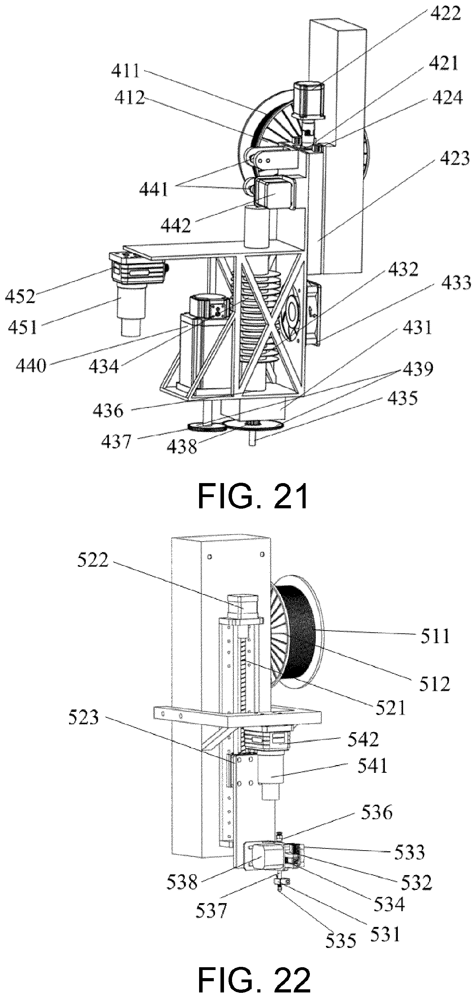

The nozzle variable diameter water-soluble resin material printing unit 4 is shown in FIG. 21. A driving motor 440 drives a gear 439 to rotate, so that the diameter of the nozzle may be changed in real-time, and the rotation speed of an extrusion driving motor 442 may also be changed so that the extrusion flow rate of the molten resin is adjusted. The driving motor 440 works to increase the diameter of the nozzle, and at the same time increases the rotation speed of the extrusion driving motor 442 to increase the extrusion flow rate of the nozzle and improve the part molding efficiency. Where the thickness of the sliced layer is small, the driving motor 440 works to reduce the diameter of the nozzle, and at the same time reduces the rotation speed of the extrusion drive motor 442. In this way, the extrusion flow rate of the nozzle is reduced and the continuity of the printing process is ensured.

Further, with reference to FIG. 16, the disclosure provides an additive manufacturing device for a complex structure of a continuous fiber-reinforced resin matrix composite material. The device includes a control unit 1, a movement execution unit 2, and a printing unit group A. The control unit includes a host computer 11 and a communication cable 12, and the host computer 11 may be an industrial computer. The movement execution unit 2 includes a six-axis industrial robot 21 and a multi-degree-of-freedom turntable 22. The printing unit group A includes a continuous fiber-reinforced resin matrix composite material fiber placement unit 3, a water-soluble resin material printing unit 4, and a fiber-reinforced composite material printing unit 5.

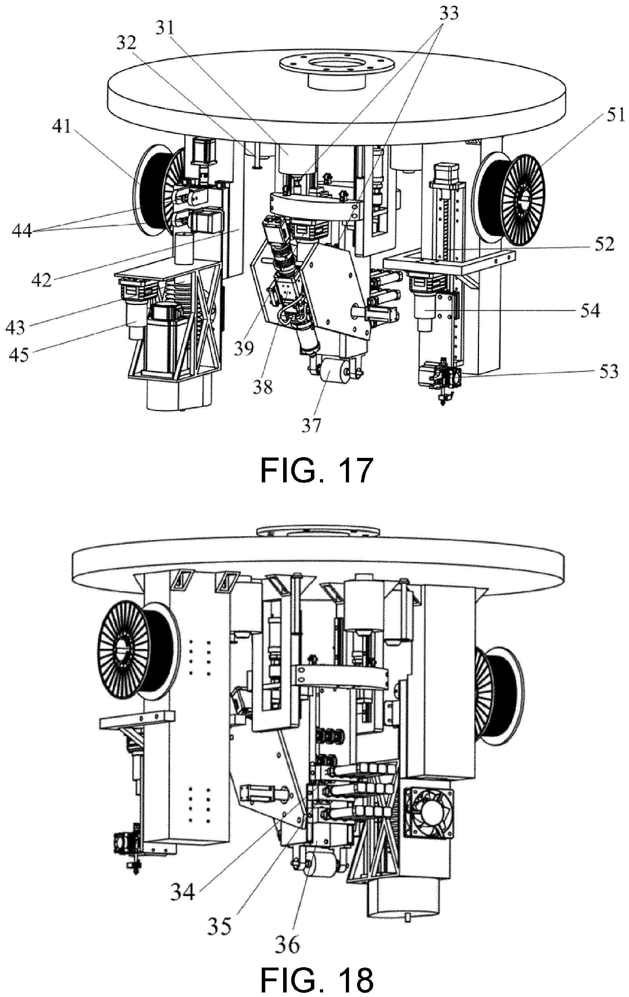

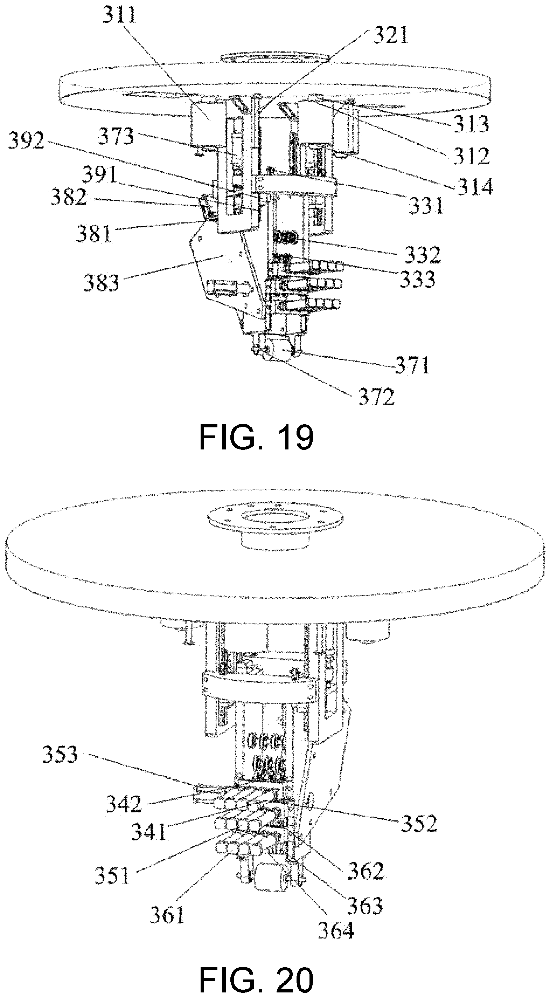

With reference to FIG. 17, FIG. 18, FIG. 19, and FIG. 20, the continuous fiber-reinforced resin matrix composite material fiber placement unit 3 includes a feeding mechanism 31, a lining paper recovery mechanism 32, a tow guiding mechanism 33, a tow clamping mechanism 34, a tow re-transporting mechanism 35, a tow shearing mechanism 36, a pressure roller mechanism 37, a laser heater 38, and an image collector 39. The feeding mechanism includes a material fiber storage 311, a fiber storage sleeve 312, a tension monitor 313, and a fiber storage remaining amount monitor 314. The lining paper recovery mechanism 32 includes a lining paper recovery sleeve 321. The tow guiding mechanism 33 includes a guiding wheel 331 for first guiding around the lining paper recovery sleeve, a guiding wheel 332 that continues to transport secondary guiding, and a guiding wheel 333 for third guiding that forms a specific angle with the guiding wheel of the secondary guiding to limit the guiding of the tow. The tow clamping mechanism 34 includes a cylinder 341 and a clamping wheel 342 corresponding to the number of tows. The tow re-transporting mechanism 35 includes a cylinder 351, a transporting roller 352, and a driving motor 353 corresponding to the number of tows. The tow shearing mechanism 36 includes a cylinder 361, a cutter 362, a tow clamping plate 363, and a tow material outage monitor 364 corresponding to the number of tows. The pressure roller mechanism 37 may include a pressure roller 371 capable of rolling multi-strand carbon fiber composite tows, a constant pressure monitor 372, and a pressure cylinder 373. The laser heater 38 includes a laser output device 381 with a temperature that can melt the resin matrix on the surface of the continuous carbon fiber composite material, a temperature monitor 382, and a laser output device clamping plate 383. The image collector 39 includes a CCD camera 391 and an image processing and analysis device 392.

With reference to FIG. 21, the water-soluble resin material printing unit 4 includes a feeding mechanism 41, a nozzle lifting mechanism 42, an extrusion mechanism 43, a tow guiding mechanism 44, and an image collector 45. The feeding mechanism 41 includes a water-soluble resin material fiber storage 411 and a fiber storage remaining amount monitor 412. The nozzle lifting mechanism 42 includes a lead screw 421, a driving motor 422, a nozzle connecting plate 423, and a sliding rail block 424. The extrusion mechanism 43 includes a heating block 431, a heat sink 432, a fan 433, an extrusion screw 434, a nozzle 435, a material outage monitor 436, a temperature detector 437, a tow flow rate adjustment device 438, a gear 439, and a drive motor 440. The tow guiding mechanism 44 includes a guiding pulley and a driving motor 442. The image collector 45 includes a CCD camera 451 and an image processing and analysis device 452.

With reference to FIG. 22, a continuous fiber-reinforced resin matrix composite material printing unit, that is, the fiber-reinforced composite material printing unit 5, includes a feeding mechanism 51, a nozzle lifting mechanism 52, an extrusion mechanism 53, and an image collector 54. The feeding mechanism 51 includes a material fiber storage 511 and a fiber storage remaining amount monitor 512. The nozzle lifting mechanism 52 includes a lead screw 521, a driving motor 522, and a nozzle connecting plate 523. The extrusion mechanism 53 includes a heating block 531, a heat sink 532, a fan 533, an extrusion gear 534, a nozzle 535, a material outage monitor 536, a temperature monitor 537, and a driving motor 538. The image collector 54 includes a CCD camera 541 and an image processing and analysis device 542.

The six-axis industrial robot 21 and the multi-degree-of-freedom turntable 22 in the movement execution unit 2 work together, additive manufacturing with eight degrees of freedom may be achieved, and the "step effect" in the conventional additive manufacturing process is reduced. The continuous fiber-reinforced resin matrix composite material fiber placement unit 3 is responsible for completing the additive manufacturing process of the lower skin and the upper skin. During the skin-forming process, the number of tows is controlled by the tow shearing mechanism 36 and the tow clamping mechanism 34 and can be adjusted in real-time to optimize the forming quality. According to the variable flow rate printing method, the water-soluble resin material printing unit 4 sends signals from the host computer 11 to the driving motor 440 and the driving motor 442 to regulate the diameter of the nozzle and change the tow feeding rate in real-time. In this way, the molding accuracy as well as the molding efficiency are improved. The continuous fiber-reinforced resin matrix composite material printing unit, that is, the fiber-reinforced composite material printing unit 5, combines the proposed novel honeycomb structure filling algorithm to optimize the honeycomb structure molding quality and achieve tightly bonded printing of the honeycomb structure on the lower skin structure. During the molding process of the three units, the CCD camera combines deep learning algorithms with real-time communication with the host computer to monitor the printing process in real-time, repair defects, and terminate printing in a timely manner.

In the additive manufacturing method for the complex structure of the continuous fiber-reinforced resin matrix composite material provided by the disclosure, laser heating, the constant-force pressure roller-assisted fiber placement process, and the fused deposition modeling process are combined. Further, based on the above, a novel printing method combining slicing and a variable flow nozzle, a complex honeycomb structure printing algorithm, and an anti-collapse pressure roller rolling method are innovatively provided. In this way, the automation level of preparing a complex skin-honeycomb sandwich layer structure part may be quickly improved, and the mechanical properties and surface quality of the part may be enhanced while reducing the weight of the part. This method effectively makes up for the defects in the current manufacturing of skin-honeycomb sandwich layer structure parts. Compared to conventional manufacturing methods, part manufacturing time and costs may be significantly lowered while ensuring mechanical properties.

The additive manufacturing method and manufacturing device for the complex structure of the fiber-reinforced composite material provided by the disclosure are not only suitable for continuous fibers but also for other forms of fibers, such as chopped fibers, etc., and are not specifically limited.

Further, In the disclosure, the entire printing process of skin-honeycomb sandwich layer structure parts is monitored in real-time, printing defects may be repaired, and printing may be terminated in real-time to avoid waste of printing materials and to reduce manufacturing costs.

In the disclosure, the combination of the six-axis industrial robot and the multi-degree-of-freedom turntable may effectively eliminate the "step effect" defect commonly found in the currently available additive manufacturing process. Further, the printing path may be adjusted at any time according to the material fiber direction and the mechanics performance requirements of the part, so as to provide favorable strength and stiffness distribution of the entire part.

A person having ordinary skill in the art should be able to easily understand that the above description is only preferred embodiments of the disclosure and is not intended to limit the disclosure. Any modifications, equivalent replacements, and modifications made without departing from the spirit and principles of the disclosure should fall within the protection scope of the disclosure.

**Claims**

1. An additive manufacturing method for a complex structure of a fiber-reinforced composite material, **characterized in that**, the complex structure is a skin-honeycomb sandwich layer structure, and the manufacturing method comprises:

    S1, printing a supporting mold through a fused deposition additive manufacturing process and by using a water-soluble resin material;
    S2, assisting a fiber automatic placement process through laser heating and constant force rolling and performing fiber tow placement on the supporting mold to form a lower skin structure by using a fiber-reinforced pre-preg material;
    S3, printing and forming a honeycomb structure on a surface of the lower skin structure through the fused deposition additive manufacturing process and by using the fiber-reinforced composite material;
    S4, performing the fiber tow placement on the honeycomb structure by adopting the process in S2 to form an upper skin structure; and
    S5, removing the supporting mold to obtain the integrally-formed skin-honeycomb sandwich layer structure.

2. The additive manufacturing method for the complex structure of the fiber-reinforced composite material according to claim 1, **characterized in that**, an upper surface of the supporting mold in S1 is a curved surface structure, and S1 specifically comprises:

S11, extracting a variation feature of the curved surface structure, slicing and layering a three-dimensional model of the supporting mold in a direction from a lower surface to the upper surface, and setting each of sliced layers as a curved surface, wherein a curved surface variation feature of each of the sliced layers is consistent with the variation feature of the curved surface structure; and

S12, sequentially printing each of the sliced layers in the direction from the lower surface to the upper surface.

3. The additive manufacturing method for the complex structure of the fiber-reinforced composite material according to claim 2, **characterized in that**, S12 specifically comprises:

when any of the sliced layers is printed, adjusting discharge flow rates for printing in real-time according to thickness variations of the sliced layer, so that the discharge flow rate of a thicker portion is greater than the discharge flow rate of a thinner portion.

4. The additive manufacturing method for the complex structure of the fiber-reinforced composite material according to any one of claims 1 to 3, **characterized in that**, a path-filling algorithm of the honeycomb structure in S3 specifically is:

performing periodic processing on a planar structure of the honeycomb structure and dividing the planar structure into a plurality of repeated units arranged sequentially in an X direction;

symmetrically dividing each of the repeated units, wherein a line of symmetry is in a Y direction, such that each of the repeated units comprises an odd-numbered curve segment and an even-numbered curve segment;

periodically dividing the odd-numbered curve segment and the even-numbered curve segment into any of the repeated units in the Y direction and analyzing a coordinate path of each periodic line segment to obtain coordinate paths of both the odd-numbered curve segment and the even-numbered curve segment in any of the repeated units; and

obtaining the coordinate paths of both the odd-numbered curve segment and the even-numbered curve segment in any of the repeated units according to a gap between different repeated units.

5. The additive manufacturing method for the complex structure of the fiber-reinforced composite material according to any one of claims 1 to 3, **characterized in that**, S2 and S4 specifically comprise:

performing the fiber tow placement through laser heating, performing a compaction operation during the fiber tow placement process by using a pressure roller, and monitoring a real-time placement pressure exerted by the pressure roller on the fiber tow, so that the real-time placement pressure is consistent with a predetermined placement pressure.

6. The additive manufacturing method for the complex structure of the fiber-reinforced composite material according to claim 5, **characterized in that**, a method of obtaining the predetermined placement pressure is:

obtaining a pressure formed by deformation of the pressure roller when the pressure roller compacts the fiber tow according to shape information and material information of the pressure roller;

obtaining a functional relationship among the real-time placement pressure exerted by the pressure roller, the pressure formed by the deformation of the pressure roller, and an actual pressure of the fiber tow; and

obtaining the predetermined placement pressure according to the functional relationship and a predetermined pressure of the fiber tow.

7. The additive manufacturing method for the complex structure of the fiber-reinforced composite material according to claim 5, **characterized in that**, a surface of the pressure roller is provided with a honeycomb cross-section shape, and the honeycomb cross-section shape is fitted with the honeycomb structure.

8. The additive manufacturing method for the complex structure of the fiber-reinforced composite material according to any one of claims 1 to 3, **characterized in that**, the fiber tow placement performed in S2 and S4 specifically comprises:

increasing a number of fiber tows in a location with a small curvature and reducing a number of fiber tows in a location with a large curvature.

9. The additive manufacturing method for the complex structure of the fiber-reinforced composite material according to any one of claims 1 to 3, **characterized in that**, the process from S1 to S4 further comprises:

monitoring the printing process in real-time and selecting to continue printing, repair printing, or terminate printing according to a monitoring result.

10. An additive manufacturing device for a complex structure of a fiber-reinforced composite material, **characterized in**

**that**, comprises a host computer, a robot, a turntable, and a printing unit group, wherein the robot, the turntable, and the printing unit group are electrically connected to the host computer, the printing unit group is connected to the robot, and the printing unit group comprises a fiber placement unit, a water-soluble resin material printing unit, and a fiber-reinforced composite material printing unit.

Printing a supporting mold through a fused deposition additive manufacturing process and by using a water-soluble resin material — S1

Assisting a fiber automatic placement process through laser heating and constant force rolling and performing fiber tow placement on the supporting mold to form a lower skin structure by using a fiber-reinforced pre-preg material — S2

Printing and forming a honeycomb structure on the surface of the lower skin structure through the fused deposition additive manufacturing process and by using a fiber-reinforced composite material — S3

Performing the fiber tow placement on the honeycomb structure by adopting the process in S2 to form an upper skin structure — S4

Removing the supporting mold to obtain the integrally formed skin-honeycomb sandwich layer structure — S5

# FIG. 1

FIG. 2

FIG. 3

FIG. 4

FIG. 5

FIG. 6

FIG. 7

FIG. 8

FIG. 9

FIG. 10

FIG. 11

# FIG. 12

# FIG. 13

# FIG. 14

```
                              ┌─────────┐
                              │  Start  │
                              └─────────┘
                                   │
   ┌───────────────────────────────────────────────────────────────┐
   │ Data such as a three-dimensional model of a printed part,      │
   │ application requirements and performance indicators are        │
   │ imported into a host computer                                  │
   └───────────────────────────────────────────────────────────────┘
                                   │
   ┌───────────────────────────────────────────────────────────────┐
   │ A corresponding reel is placed according to the result         │
   └───────────────────────────────────────────────────────────────┘
                                   │
   ┌───────────────────────────────────────────────────────────────┐
   │ A printing table and a printing nozzle are preheated, and a    │
   │ monitoring system is turned on                                 │
   └───────────────────────────────────────────────────────────────┘
                                   │
   ┌───────────────────────────────────────────────────────────────┐
   │ A forming mold is printed on the printing table by adopting a  │
   │ fused deposition process                                       │
   └───────────────────────────────────────────────────────────────┘
                                   │
         The monitoring system performs defect monitoring, and the
         host computer determines whether to perform defect repairing   — Y
                                   │ N
         The host computer determines whether to terminate printing  — Y
                                   │ N
   ┌───────────────────────────────────────────────────────────────┐
   │ Skin is placed on the forming mold structure by adopting a     │
   │ laser heating fiber placement process                          │
   └───────────────────────────────────────────────────────────────┘
                                   │
         The monitoring system performs defect monitoring, and the
         host computer determines whether to perform defect repairing   — Y
                                   │ N
         The host computer determines whether to terminate printing  — Y
                                   │ N

         A honeycomb structure is printed on the skin by adopting the
         fused deposition process
                                   │
         The monitoring system performs defect monitoring, and the
         host computer determines whether to perform defect repairing
                                   │
         The host computer determines whether to terminate printing  — Y
                                   │ N
   ┌───────────────────────────────────────────────────────────────┐
   │ The skin is placed on the honeycomb structure again by         │
   │ adopting the laser heating fiber placement process             │
   └───────────────────────────────────────────────────────────────┘
                                   │
         The monitoring system performs defect monitoring, and the
         host computer determines whether to perform defect repairing   — Y
                                   │ N
         The host computer determines whether to terminate printing  — Y
                                   │ N
   ┌───────────────────────────────────────────────────────────────┐
   │ The printed part is placed into a special solution for mold    │
   │ removal                                                        │
   └───────────────────────────────────────────────────────────────┘
                                   │
                              ┌─────────┐
                              │   End   │
                              └─────────┘
```

FIG. 15

FIG. 16

EP 4 477 388 A1

FIG. 17

FIG. 18

FIG. 19

FIG. 20

FIG. 21

FIG. 22

## INTERNATIONAL SEARCH REPORT

| International application No. |
|---|
| **PCT/CN2023/095683** |

### A. CLASSIFICATION OF SUBJECT MATTER

B29C64/165 (2017.01)i; B29C64/40(2017.01)i; B29C70/44(2006.01)i

According to International Patent Classification (IPC) or to both national classification and IPC

### B. FIELDS SEARCHED

Minimum documentation searched (classification system followed by classification symbols)

IPC: B29C64; B29C70

Documentation searched other than minimum documentation to the extent that such documents are included in the fields searched

Electronic data base consulted during the international search (name of data base and, where practicable, search terms used)

CNTXT; ENTXTC; WPABSC; WPABS; DWPI; CJFD; 中国期刊网全文数据库, China Journal Network Full-text Database (CJFD): 华中科技大学, 曲线, 曲面, 曲率, 曲度, 弧面, 弧线, 弧形, 弧度, 支承, 支撑, 支架, 基架, 基底, 基板, 下模, 底模, 托架, 消失模, 牺牲模, 增材, 打印, 夹芯, 夹板, 夹心, 夹层, 蜂窝, 六边形, 流量, 料量, 流出量, 切片, 片层, 一层, 每层, 逐层, 压辊, 辊压, 滚压, 压滚, 滚轮, 辊轮, curvature, curved, support+, mold, mould, 3D s print+, alveolate, beehive, honeycomb, impress+

### C. DOCUMENTS CONSIDERED TO BE RELEVANT

| Category* | Citation of document, with indication, where appropriate, of the relevant passages | Relevant to claim No. |
|---|---|---|
| Y | CN 114013069 A (HUAZHONG UNIVERSITY OF SCIENCE AND TECHNOLOGY) 08 February 2022 (2022-02-08) description, paragraphs 37-66 and 77-88, and figures 1-7 | 1-2, 5, 8-10 |
| Y | CN 115972572 A (HUAZHONG UNIVERSITY OF SCIENCE AND TECHNOLOGY) 18 April 2023 (2023-04-18) description, paragraphs 37-53, and figures 1-4 | 1-2, 5, 8-10 |
| A | CN 112140528 A (BEIJING JIKE GUOCHUANG LIGHTWEIGHT SCIENCE RESEARCH INSTITUTE CO., LTD.) 29 December 2020 (2020-12-29) entire document | 1-10 |
| A | CN 114292115 A (HUAZHONG UNIVERSITY OF SCIENCE AND TECHNOLOGY) 08 April 2022 (2022-04-08) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 November 2023** | **09 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/095683** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 114407352 A (XI'AN JIAOTONG UNIVERSITY) 29 April 2022 (2022-04-29) entire document | 1-10 |
| A | CN 105608275 A (NANJING UNIVERSITY OF AERONAUTICS AND ASTRONAUTICS) 25 May 2016 (2016-05-25) entire document | 1-10 |
| A | CN 112644100 A (XI'AN JIAOTONG UNIVERSITY) 13 April 2021 (2021-04-13) entire document | 1-10 |
| A | CN 103722171 A (HEFEI UNIVERSITY OF TECHNOLOGY) 16 April 2014 (2014-04-16) entire document | 1-10 |
| A | US 2020114573 A1 (DIVERGENT TECHNOLOGIES, INC.) 16 April 2020 (2020-04-16) entire document | 1-10 |
| A | US 2018169954 A1 (TEXTRON AVIATION INC.) 21 June 2018 (2018-06-21) entire document | 1-10 |
| A | US 2021308961 A1 (THE BOEING CO.) 07 October 2021 (2021-10-07) entire document | 1-10 |

Form PCT/ISA/210 (second sheet) (July 2022)

## INTERNATIONAL SEARCH REPORT
### Information on patent family members

International application No.

**PCT/CN2023/095683**

| Patent document cited in search report | | | Publication date (day/month/year) | Patent family member(s) | | | Publication date (day/month/year) |
|---|---|---|---|---|---|---|---|
| CN | 114013069 | A | 08 February 2022 | None | | | |
| CN | 115972572 | A | 18 April 2023 | None | | | |
| CN | 112140528 | A | 29 December 2020 | None | | | |
| CN | 114292115 | A | 08 April 2022 | None | | | |
| CN | 114407352 | A | 29 April 2022 | None | | | |
| CN | 105608275 | A | 25 May 2016 | None | | | |
| CN | 112644100 | A | 13 April 2021 | None | | | |
| CN | 103722171 | A | 16 April 2014 | None | | | |
| US | 2020114573 | A1 | 16 April 2020 | US | 2022355569 | A1 | 10 November 2022 |
| | | | | WO | 2020081645 | A1 | 23 April 2020 |
| | | | | US | 11260582 | B2 | 01 March 2022 |
| | | | | EP | 3866998 | A1 | 25 August 2021 |
| US | 2018169954 | A1 | 21 June 2018 | US | 10906248 | B2 | 02 February 2021 |
| US | 2021308961 | A1 | 07 October 2021 | US | 11745440 | B2 | 05 September 2023 |

Form PCT/ISA/210 (patent family annex) (July 2022)